(19) Europäisches Patentamt
European Patent Office
Office européen des brevets

(11) **EP 1 415 189 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(21) Anmeldenummer: **01994591.4**

(22) Anmeldetag: **28.11.2001**

(51) Int Cl.:
**G02C 7/02** (2006.01)

(86) Internationale Anmeldenummer:
**PCT/DE2001/004441**

(87) Internationale Veröffentlichungsnummer:
**WO 2002/044792 (06.06.2002 Gazette 2002/23)**

(54) **PROGRESSIVES BRILLENGLAS FÜR GROSSE UND MITTLERE OBJEKTENTFERNUNGEN**

PROGRESSIVE SPECTACLE LENS FOR SEEING OBJECTS AT A LARGE OR AVERAGE DISTANCE

VERRE DE LUNETTES PROGRESSIF POUR LA VISION A GRANDE OU MOYENNE DISTANCE

(84) Benannte Vertragsstaaten:
**DE ES FR GB IT**

(30) Priorität: **28.11.2000 DE 10059023**

(43) Veröffentlichungstag der Anmeldung:
**06.05.2004 Patentblatt 2004/19**

(73) Patentinhaber: **Rodenstock GmbH**
**80469 München (DE)**

(72) Erfinder:
• **DORSCH, Rainer**
**81477 München (DE)**
• **HAIMERL, Walter**
**80337 München (DE)**

(74) Vertreter: **Müller-Boré & Partner**
**Patentanwälte**
**Grafinger Strasse 2**
**81671 München (DE)**

(56) Entgegenhaltungen:
WO-A-97/40415          FR-A- 2 744 534
US-A- 3 687 528

• GUILINO G H: "DESIGN PHILOSOPHY FOR PROGRESSIVE ADDITION LENSES" APPLIED OPTICS, OPTICAL SOCIETY OF AMERICA, WASHINGTON, US, Bd. 32, Nr. 1, 1993, Seiten 111-117, XP000331309 ISSN: 0003-6935 in der Anmeldung erwähnt

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

**Technisches Gebiet**

Die Erfindung bezieht sich auf ein progressives Brillenglas für große und mittlere Objektentfernungen.

**Stand der Technik**

Unter progressiven Brillengläsern (auch als Gleitsichtgläser, Multifokalgläser etc. bezeichnet) versteht man üblicherweise Brillengläser, die in dem Bereich, durch den der Brillenträger einen in größerer Entfernung befindlichen Gegenstand betrachtet - i.f. als Fernteil bezeichnet -, eine andere (geringere) Brechkraft haben als in dem Bereich (Nahteil), durch den der Brillenträger einen nahen Gegenstand betrachtet. Zwischen dem Fernteil und dem Nahteil ist die sog. Progressionszone angeordnet, in der die Wirkung des Brillenglases von der des Fernteils kontinuierlich auf die des Nahteils ansteigt. Den Wert des Wirkungsanstiegs bezeichnet man auch als Addition.

In der Regel ist der Fernteil im oberen Teil des Brillenglases angeordnet und für das Blicken "ins Unendliche" ausgelegt, während der Nahteil im unteren Bereich angeordnet ist, und insbesondere zum Lesen ausgelegt ist. Für Spezialanwendungen - genannt werden sollen hier exemplarisch Pilotenbrillen oder Brillen für Bildschirmarbeitsplätze- können der Fern- und der Nahteil auch anders angeordnet sein und/oder für andere Entfernungen ausgelegt sein. Hierzu wird auf die FR 2 744 534 A1 verwiesen. Ferner ist es möglich, daß mehrere Nahteile und/ oder Fernteile und entsprechend Progressionszonen vorhanden sind.

Bei progressiven Brillengläsern mit konstantem Brechungsindex ist es für die Zunahme der Brechkraft zwischen dem Fernteil und dem Nahteil erforderlich, daß sich die Krümmung einer oder beider Flächen vom Fernteil zum Nahteil kontinuierlich ändert.

Die Flächen von Brillengläsern werden üblicherweise durch die sogenannten Hauptkrümmungsradien R1 und R2 in jedem Punkt der Fläche charakterisiert. (Manchmal werden anstelle der Hauptkrümmungsradien auch die sogenannten Hauptkrümmungen K1 = 1/R1 und K2 = 1/R2 angegeben. Die Hauptkrümmungsradien bestimmen zusammen mit dem Brechungsindex n des Glasmaterials die für die augenoptische Charakterisierung einer Fläche häufig verwen-deten Größen:

$$\text{Flächenbrechwert } D = 0{,}5 * (n-1) * (1/R1 + 1/R2)$$

$$\text{Flächenastigmatismus } A = (n-1) * (1/R1 - 1/R2)$$

Der Flächenbrechwert D ist die Größe, über die die Zunahme der Wirkung vom Fernteil zum Nahteil erreicht wird. Der Flächenastigmatismus A (anschaulich Zylinderwirkung) ist -sofern er nicht zu Korrektionszwecken dient - eine "störende Eigenschaft", da ein Restastigmatismus des Systems Auge/Brillenglas, der einen Wert von ca. 0,5 dpt übersteigt, zu einem als unscharf wahrgenommenen Bild auf der Netzhaut führt.

Die zur Erzielung der Flächenbrechwert-Zuwachses erforderliche Änderung der Krümmung der Fläche(n) ohne das Sehen "störenden" Flächenastigmatismus ist zwar relativ einfach längs einer (ebenen oder gewundenen) Linie zu erreichen, seitlich dieser Linie ergeben sich jedoch starke "Verschneidungen" der Fläche, die zu einem gro-ßen Flächenastigmatismus führen, der das Glas in den Bereichen seitlich der genannten Linie mehr oder weniger schlecht macht. Bei einer ebenen, als Nabellinie ausgebildeten Linie steigt nach dem Satz von Minkwitz der Flächenastigmatismus in der Richtung senkrecht zur Nabellinie mit dem doppelten Wert des Gradienten der Flächenbrechkraft längs der Nabellinie an, so daß sich insbesondere in der Progressionszone bereits nahe der Nabellinie störende Werte des Flächenastigmatismus ergeben. (Eine Linie, die in jedem Punkt gleiche Hauptkrümmungen aufweist, die also Flächenastigmatismus-frei ist, bezeichnet man als Nabellinie oder ombilische Linie).

Bei den bekannten progressiven Brillengläsern, bei denen ein Bereich zum Sehen in die Ferne (Fernteil) und der andere Bereich zum Sehen in die Nähe, d. h. für Entfernungen von ca. 33 bis 45 cm ausgelegt ist (Nahteil), verengt sich der Bereich klarer Sicht ausgehend vom Fernsichtbereich in der sogenannten Progressionszone auf eine Breite von wenigen Millimetern, typischerweise beim Stand der Technik 2 bis 3 mm, und verbreitert sich dann im oberen Bereich des Nahsichtbereichs auf eine Breite von typischerweise mehr als 7 mm. Der Bereich klarer Sicht hat damit bei progressiven Brillengläsern gemäß dem Stand der Technik eine Form, die ähnlich einer (unten schmäleren) Sanduhr ist. Dies gilt auch für das aus der WO 97/40415 bekannte progressive Brillenglas, bei dem der untere Bereich klarer Sicht für das Sehen in mittlere Entfernungen ausgelegt ist.

Die Einschnürung des Bereichs klarer Sicht in der Progressionszone, d.h. in dem Bereich zwischen dem Fernteil und dem unteren Bereich klarer Sicht (Nahteil) ist insbesondere dann besonders hinderlich, wenn der Brillenträger aufgrund seiner Tätigkeit den Nahteil (ausgelegt für Sehentfernungen von ca. 30 bis ca. 40 cm) nicht nutzt, sondern lediglich in große oder mittlere Entfernungen bis typischerweise 1 Meter oder etwas weniger blickt. Beispielhaft seien für solche Tätigkeiten Tennis-, Fußball oder Golfspielen oder Überwachungstätigkeiten genannt.

## Darstellung der Erfindung

Der Erfindung liegt die Aufgabe zugrunde, ein progressives Brillenglas anzugeben, bei dem der Bereich klarer Sicht nicht nur im Fernteil, sondern auch in dem Teil, der für das Sehen in mittlere Entfernungen bis ca. 1 Meter ausgelegt ist, so groß ist, daß er das scharfe Betrachten eines größeren Bereichs ohne Kopfbewegung ermöglicht.

Eine erfindungsgemäße Lösung dieser Aufgabe ist im Patentanspruch 1 angegeben. Weiterbildungen der Erfindung sind Gegenstand der Ansprüche 2 folgende.

Die Erfindung geht von folgender Erkenntnis aus:

Es gibt eine Reihe von Einsatzfällen bzw. Tätigkeiten, die Sehanforderungen in die Nähe explizit ausschließen oder bei denen Sehanforderungen für sehr kleine Entfernungen (weniger als 1 m bis ca. 33 cm) nachrangig sind. Für Brillenträger, die eine Brille für diese Einsatzfälle bzw. Tätigkeiten wünschen, können erfindungsgemäß Brillengläser bereitgestellt werden, die (im wesentlichen) nur eine Korrektion der Sehschärfe im Fernbereich und im Zwischenbereich ermöglichen, dafür aber gegenüber herkömmlichen progressiven Brillengläsern überlegene Eigenschaften insbesondere im Zwischenbereich haben.

Erfindungsgemäß wird deshalb ein Brillenglas geschaffen, das in einem ersten Durchblickbereich einen für das Sehen in die Ferne geeigneten Brechwert in Gebrauchsstellung, und in einem zweiten Durchblickbereich einen für das Sehen in mittlere Entfernungen, d. h. für Entfernungen von ca. einem Meter und mehr geeigneten Brechwert in Gebrauchsstellung aufweist. Der Brechwert steigt dabei kontinuierlich von dem ersten Durchblickbereich längs einer ebenen oder gewundenen Hauptlinie (Hauptmeridian) zu dem zweiten Durchblickbereich an.

Der Begriff "Brechwert in Gebrauchsstellung", wie er in dieser Anmeldung verwandt wird, bezeichnet dabei die optische Wirkung des Brillenglases in der sogenannten Gebrauchsstellung: Diese Gebrauchsstellungs-Wirkung kann man ebenso wie den Restastigmatismus des Systems Brillenglas/Auge beispielsweise mittels einer Strahldurchrechnung des in einem bestimmten Abstand und mit einer bestimmten Vorneigung vor dem Auge angeordneten Brillenglases berechnen. Als Auge wird dabei ein Normal-Auge mit den jeweiligen Rezeptdaten - erforderliche sphärische Korrektion, eventueller Astigmatismus und Lage der Achse des Astigmatismus des Auges - vorausgesetzt. Augenbewegungen können in bekannter Weise, beispielsweise nach der sog. Listing'schen Regel berücksichtigt werden. Ebenso wird eine vorhandene RestAkkomodationsfähigkeit durch die Vorgabe einer Zuordnung einer bestimmten Objektentfernung zu einer bestimmten Wirkungszunahme berücksichtigt. Diese Zuordnung bestimmt dann auch den Versatz einer gewundenen Hauptlinie bzw. den Winkel, unter dem eine ebene Hauptlinie relativ zur Vertikalen verläuft, damit die Hautplinie (Hauptmeridian) der Konvergenz der Sehstrahlen beim Blicken in eine bestimmte Entfernung folgt.

In die Gebrauchsstellungs-Wirkung und den Restastigmatismus des Systems Brillenglas/Auge gehen neben den Flächendaten der vorderen und der augenseitigen Fläche des Brillenglases die Dicke des Brillenglases, der Brechungsindex und ein eventuelles Prisma sowie die bereits erwähnte Anordnung des Brillenglases relativ zum Auge ein, wobei natürlich die progressiven Eigenschaften des Brillenglases in Gebrauchsstellung wesentlich durch die Ausbildung, d.h. die Flächeneigenschaften der progressiven Fläche(n) bestimmt werden. Ebenso bestimmen die Flächenastigmatismus-Werte der progressiven Fläche wesentlich den Restastigmatismus des Systems Brillenglas/Auge.

Die Berechnung des Brechwertes in Gebrauchsstellung und des Restastigmatismus des Systems Brillenglas/Auge für ein astigmatisches oder nicht-astigmatisches Auge ist aus der Literatur bekannt. Es sind auch Rechenprogramme kommerziell erhältlich, die diese Berechnung ermöglichen.

Erfindungsgemäß wird der Verlauf des Brechwerts so gewählt, daß dieser nicht nur von dem ersten Durchblickbereich zu dem zweiten Durchblickbereich, sondern auch über den zweiten Durchblickbereich hinaus bis zum unteren Rand des Brillenglases kontinuierlich zunimmt. Im Gegensatz zu herkömmlichen progressiven Brillengläsern, bei denen der Bereich klarer Sicht eine Sanduhr-ähnliche Form hat, verengt sich bei dem erfindungsgemäßen Brillenglas der Bereich klarer Sicht, d.h. der Bereich, in dem der Restastigmatismus des Systems Brillenglas/Auge 0,5 dpt nicht übersteigt, unterhalb des ersten Durchblickbereichs zum unteren Rand des Brillenglases trichterförmig, d.h. ohne Einschnürung. Hierdurch ist der Bereich klarer Sicht gerade für Sehentfernungen von zwei Meter und darunter, d.h. insbesondere bis 1 m sehr breit: Typischerweise ist er mindestens um den Faktor zwei breiter als bei sehr guten herkömmlichen progressiven Brillengläsern für die gleiche Sehentfernung. Vor allem aber ist die trichterförmige Form des Bereichs klarer Sicht physiologisch günstiger und nicht so gewöhnungsbedürftig als die herkömmliche Form, da der Brillenträger nicht eine Verengung für mittlere Entfernungen und eine Verbreiterung für kurze Entfernungen des Bereichs klarer Sicht akzeptieren muß. Diese trichterförmige Form entspricht auch mehr der typischen Gebrauchssituation, da üblicherweise mit zunehmender Entfernung auch der Bereich größer wird, den der Brillenträger ohne Kopfbewegung und nur durch eine Augenbewegung scharf wahrnehmen möchte.

Selbstverständlich ist es möglich, daß beide Flächen des Brillenglases zum Anstieg des Brechwerts in Gebrauchsstellung beitragen, in der Regel ist es jedoch ausreichend sein, wenn nur eine der beiden Flächen, beispielsweise die augenseitige Fläche zum Anstieg des Brechwerts dadurch beiträgt, daß sich ihr Flächenbrechwert geeignet ändert.

In diesem Falle kann die andere Fläche eine rotationssymmetrische - sphärische oder asphärische - oder eine torische Fläche sein, wobei einer oder beide Hauptschnitte der torischen Fläche eine von der Kreisform abweichende Form haben können.

Besonders bevorzugt ist es jedoch, wenn die Fläche(n), die zum Anstieg des Brechwerts in der Gebrauchsstellung beitragen, individuell für die jeweilige Gebrauchssituation berechnet ist (sind). Dabei können nicht nur die typischen Parameter bei einer individualisierten Fläche - Pupillenabstand, Hornhaut/Scheitel-Abstand, Vorneigung usw. - in die Berechnung der progressiven Fläche in der Gebrauchsstellung eingehen, sondern auch die spezielle Einsatzsituation, in der der Brillenträger das Brillenglas einzusetzen gedenkt. Hierbei ist insbesondere die minimale Entfernung zu berücksichtigen, bei der der Brillenträger ohne Akkomodation noch scharf sehen können muß; diese Entfernung kann durchaus von dem im Anspruch 1 als ungefähre untere Grenze angegeben Wert von ca. 1 m nach oben abweichen. Auch kann - je nach Einsatzsituation - der erste Durchblickbereich nicht für die Entfernung "unendlich", sondern für eine kürzere Entfernung, beispielweise mehrere Meter ausgelegt sein.

Im Falle individuell berechneter progressiver Flächen ist es ferner bevorzugt, wenn diese auch einen eventuellen Astigmatismus zur Korrektion eines Astigmatismus des Auges aufbringt. Die andere Fläche - die bevorzugt die Vorderfläche ist - kann dann eine rotationssymmetrische Fläche sein; zur Verringerung der Dicke des Brillenglases oder zur Anpassung an spezielle Fassungsformen kann die andere Fläche - die dann besonders bevorzugt die Vorderfläche ist - auch eine torische Form haben, deren Astigmatismus jedoch nicht erster Linie zur Korrektion eines Augenastigmatismus dient. Der von einer zweiten Fläche, deren Form unter ästhetischen Gesichtspunkten gewählt ist, erzeugte Astigmatismus wird dann von der individuell berechneten progressiven Fläche kompensiert.

Im Falle eines nichtastigmatischen Auges und nicht zu großer Wirkungen wird der Bereich klarer Sicht (im wesentlichen) durch die 0,5 dpt-Isolinie des Flächenastigmatismus der progressiven Fläche begrenzt, die dann praktisch mit der 0,5 dpt-Linie des Restastigmatismus des Systems Auge/Brillenglas zusammenfällt.

Bei einer besonders bevorzugten Ausführungsform des erfindungsgemäßen Brillenglas ist der Verlauf der ersten Ableitung des Brechwerts längs der Hauptlinie zwischen dem ersten und dem zweiten Durchblickbereich monoton, und bei einer weiteren Ausgestaltung auch längs der Hauptlinie zwischen dem zweiten Durchblickbereich und dem unteren Rand des Brillenglases monoton. Durch diesen Verlauf der ersten Ableitung des Brechwerts ist es besonders einfach, die trichterförmige Form des Bereichs klarer Sicht ohne jede Einschnürung zu erzielen.

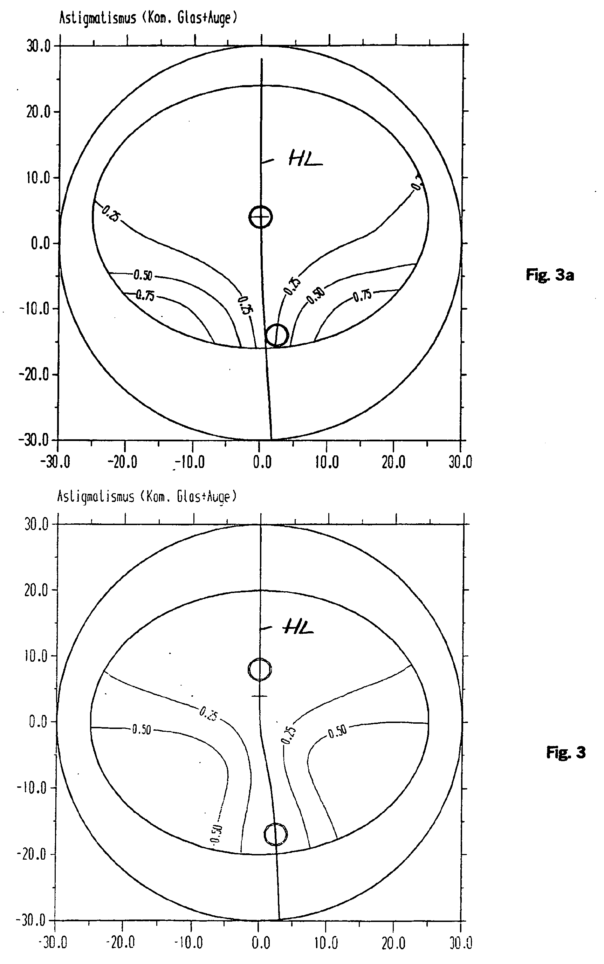

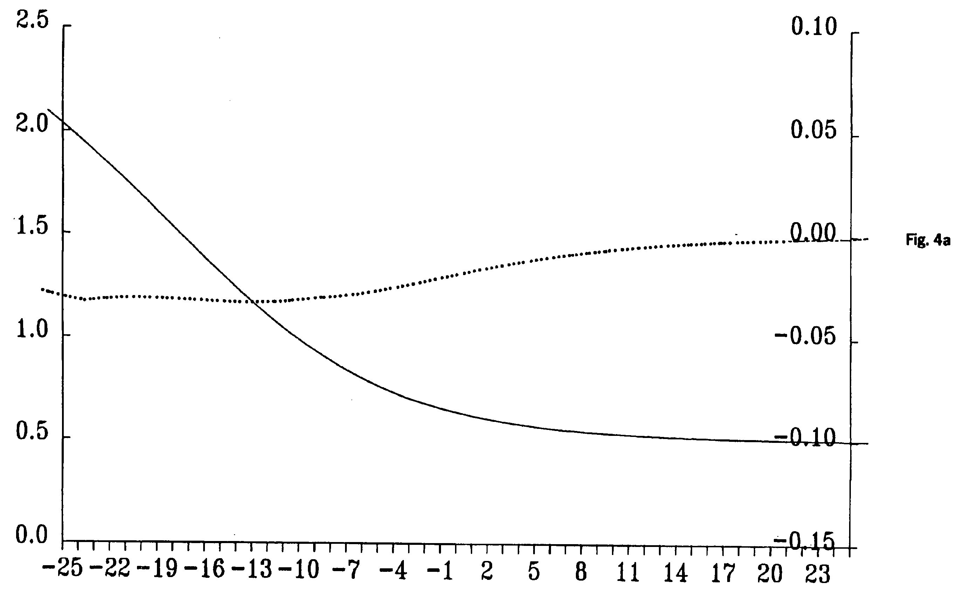

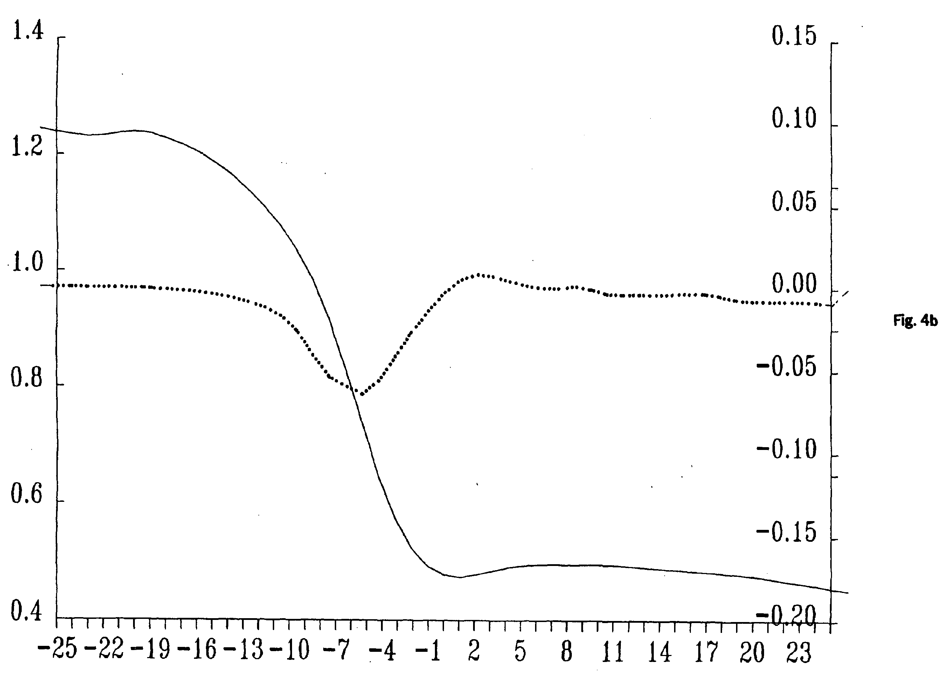

Die erfindungsgemäße Ausbildung des Brillenglases ist deshalb nicht vergleichbar mit dem insbesondere aus Fig. 3 der DE 20.44 639 A1 bekannten Brillenglas: Dieses bekannte Brillenglas hat im Punkt A3 eine Wirkung, die so groß ist, daß nicht in mittlere Entfernungen, sondern lediglich in Entfernungen von 0,5 m (ohne Akkomodation) oder weniger (mit Akkomodation) scharf gesehen werden kann. Zudem nimmt bei diesem bekannten Brillenglas ausweislich Fig. 17 die Addition unterhalb des Punktes A3 wieder ab. Entsprechendes gilt auch für das aus Fig. 4 des Artikels "Design philosophy for progressive addition lenses" von Günther H. Guilino, erschienen in Applied Optice, Vol. 32, No.1, S. 111 folgende bekannten Brillenglas. Zudem ist darauf hinzuweisen, daß die genannten Flächeneigenschaften und keine Eigenschaften in Gebrauchsstellung beschreiben.

Das erfindungsgemäße Brillenglas kann im übrigen den gleichen Durchmesser wie ein herkömmliches Brillenglas mit progressiver Wirkung haben.

## Kurze Beschreibung der Zeichnung

Die Erfindung wird nachstehend anhand eines Ausführungsbeispiels unter Bezugnahme auf die Zeichnung exemplarisch beschrieben, in der zeigen:

Fig. 1a     die sog. Objektabstandsfläche für ein Ausführungsbeispiel eines erfindungsgemäßen Brillenglases,

Fig. 1b     zum Vergleich die sog. Objektabstandsfläche für ein herkömmliches progressives Brillenglas,

Fig. 2a     die Isolinien der Zunahme des Brechwerts in Gebrauchsstellung für ein erfindungsgemäßes Brillenglas,

Fig. 2b     zum Vergleich die entsprechenden Isolinien für ein herkömmliches progressives Brillenglas,

Fig. 3a     die Isolinien für den resultierenden Astigmatismus des Systems Auge/Brillenglas für ein erfindungsgemäßes Brillenglas,

Fig. 3b     zum Vergleich die entsprechenden Isolinien für ein herkömmliches progressives Brillenglas,

Fig. 4a    den Verlauf des Brechwerts in der Gebrauchsstellung sowie der ersten Ableitung des Brechwerts längs des Hauptmeridians,

Fig. 4b    zum vergleich die entsprechenden Verläufe für ein herkömmliches progressives Brillenglas.

**Darstellung eines Ausführungsbeispiels**

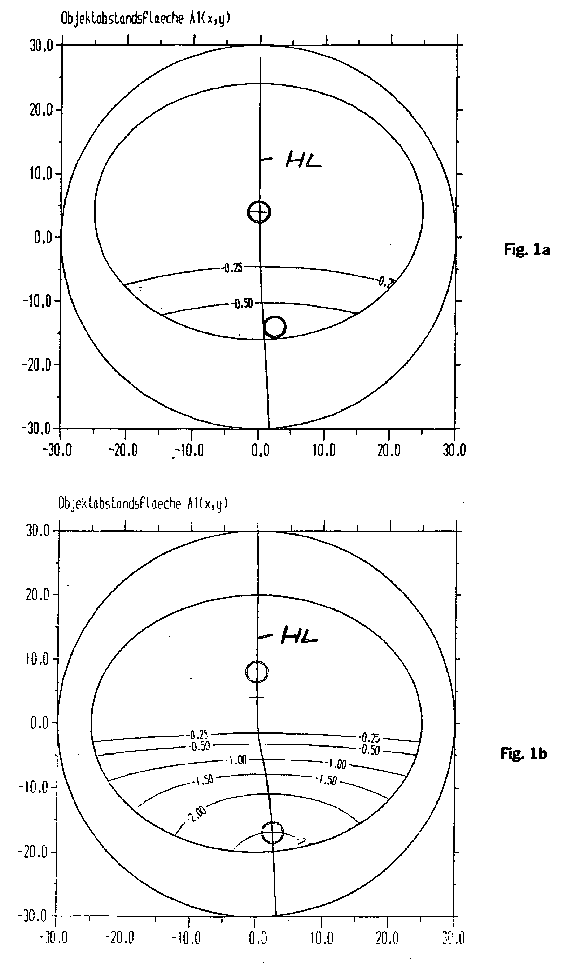

In den Teilfiguren a der Figuren 1 bis 4 sind immer die nachfolgend noch näher erläuterten Größen für ein erfindungsgemäßes Brillenglas dargestellt, während in den Teilfiguren b zum Vergleich die entsprechenden Größen für ein progressives Brillenglas nach dem Stand der Technik, d. h. ein Brillenglas mit einem Fernteil, einem Nahteil und einer dazwischen angeordneten Progressionszone dargestellt sind. Da sich die Teilfiguren a und b der jeweiligen Figur entsprechen, wird für die Erläuterung der jeweiligen Teilfigur b auf die Beschreibung der entsprechenden Teilfigur a Bezug genommen

Ohne Beschränkung der Allgemeinheit wird bei dem dargestellten Ausführungsbeispiel und dem zum Vergleich herangezogenen progressiven Brillenglas gemäß dem Stand der Technik von folgenden Voraussetzungen bzw. Anfangsbedingungen ausgegangen:

Bei der Auslegung beider Brillenglases wird angenommen, daß der Brillenträger vollständig presbyop ist, also über keine Akkomodationsfähigkeit mehr verfügt. Die erfindungsgemäßen Grundgedanke sind selbstverständlich auch auf Brillengläser übertragbar, die für Brillenträger mit einer Restakkomodationsfähigkeit bestimmt sind.

Die "rohrunden" Brillengläser haben einen Durchmesser von 60 mm; die äußere Begrenzung des rohrunden Brillenglases sowie die eines in typischer Weise gerandeten Brillenglases sind in Fig. 1 bis 3 dargestellt. Selbstverständlich sind auch größere oder kleinere Durchmesser oder andere Randformen entsprechend der Form der jeweils gewählten und Modetrends bzgl. Größe und Form unterliegenden Brillenfassung möglich.

Der Maßstab auf der Abszisse (x-Koordinate) und der Ordinate (y-Koordinate) der Figuren 1 bis 3 ist jeweils in Millimeter angegeben. Das Koordinatensystem ist dabei in Gebrauchsstellung gewählt, d.h. in der Stellung, in der sich das Brillenglas vor dem Auge befindet.

In allen Figuren 1 bis 3 sind jeweils mit Doppelringen bzw. Kreisen der Fernbezugspunkt $B_F$ (y>0) und der Nahbezugspunkt $B_N$ (y<0) - jeweils gemäß DIN- bzw. ISO-Norm - bzw. der bei dem erfindungsgemäßen Brillenglas formal entsprechend üblichen Standardwerten aufgestempelte Bezugspunkt "$B_N$" für den zweiten Durchblickbereich angegeben. Mit einem Kreuz ist der Zentrierpunkt $Z_P$ bezeichnet. Zur Erläuterung dieser Begriffe wird auf die einschlägigen Normen Bezug genommen.

Bei dem dargestellten Ausführungsbeispiel des erfindungsgemäßen Brillenglases fallen der Fernbezugspunkt $B_F$ und der Zentrierpunkt Zp zusammen.

Weiterhin ist bei den Figuren 1 bis 3 die jeweils angenommene Hauptblicklinie bzw. Hauptlinie HL eingetragen, von der bei der Berechnung des Brillenglases ausgegangen wird. Damit ist gemeint, daß einer bestimmten Blicksenkung eine bestimmte Konvergenz der Augen zugeordnet wird. Die Zuordnung bzw. Korrelation zwischen Blicksenkung und Konvergenz ist dabei zwischen dem erfindungsgemäßen Brillenglas und dem aus dem Stand der Technik bekannten progressiven Brillenglas unterschiedlich !

Selbstverständlich ist aber die Erfindung nicht auf die in Fig. 1a exemplarisch angegebene Korrelation zwischen Blicksenkung und Konvergenz der Augen beschränkt.

Aus der Zuordnung von Blicksenkung und Konvergenz ergibt sich für jede Blicksenkung ein Abstand zwischen dem Schnittpunkt der Achsen der Augen und dem Scheitel der Pupillen. Diesem Abstand kann eine Akkomodation (in dpt, d.h. $m^{-1}$) zugeordnet werden, die erforderlich ist, um einen in diesem Abstand vor den Augen gelegenen Gegenstand scharf zu sehen.

In den Figuren 1 sind die sogenannten Objektabstandsflächen für ein erfindungsgemäßes Brillenglas (Teilfig. a) und ein herkömmliches progressives Brillenglas (Teilfig. b) dargestellt, die sich aus der jeweils angenommenen Korrelation zwischen Blicksenkung und Konvergenz der Augen für ein unmittelbar vor der Nase oder seitlich versetzt gelegenes Objekt ergeben:

Bei dem in Fig. la dargestellten erfindungsgemäßen Brillenglas ist die Objektentfernung in dem bei y = -14 mm liegenden Bezugspunkt des zweiten Durchblickbereichs, der dem Nahbezugspunkt $B_N$ bei einem herkömmlichen progressiven Brillenglas entspricht, auf 1,30 m gesetzt. Für diese Entfernung beträgt die erforderliche Akkomodation

$$1/1,30 = 0,77 \text{ dpt.}$$

Als Isolinien sind die Objektabstände angegeben, für die die jeweils erforderliche Akkomodation 0,25 dpt und 0,5 dpt beträgt.

Nur guten Ordnung halber soll darauf hingewiesen werden, daß bei dem erfindungsgemäßen Brillenglas der Bezugspunkt für den zweiten Durchblickbereich entsprechend den einschlägigen Standards bzw. Normen angegeben ist, so daß die zugrundegelegte Hauptblicklinie nicht durch die auf dem Brillenglas aufgestempelte Marke für den Bezugspunkt "$B_N$" verläuft.

Bei dem zum Vergleich herangezogenen progressiven Brillenglas nach dem Stand der Technik beträgt die "Auslege-Entfernung" im Nahbezugspunkt 33 cm, so daß die erforderliche Akkomodation 3 dpt beträgt.

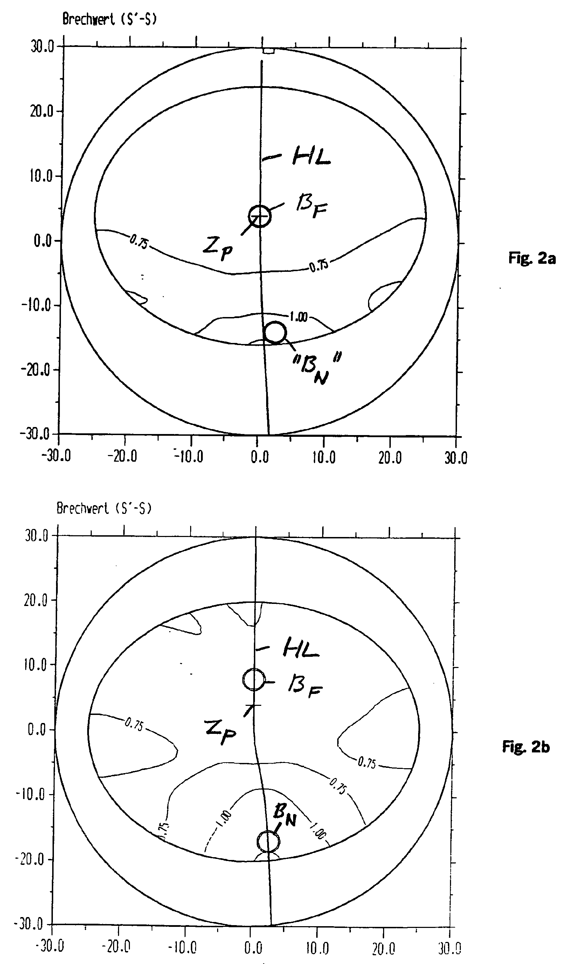

Unter Zugrundelegung der gemäß Fig. 1a vorgegebenen Objektabstandsfläche ist das exemplarisch beschriebene erfindungsgemäße Brillenglas berechnet worden, das in den Figuren 2a bis 4a näher beschrieben ist:

Fig. 2a zeigt in einer Isolinien-Darstellung die Zunahme (S'-S) des Brechwerts (in dpt) in Gebrauchsstellung. Dabei ist S' der Kehrwert der bildseitigen Schnittweite in Gebrauchsstellung und S der Kehrwert der objektseitigen Schnittweite.

Fig. 2a ist zu entnehmen, daß die Isolinien der Brechwertzunahme im Bereich der Hauptblicklinie annähernd horizontal und damit physiologisch günstig verlaufen. Darüberhinaus verlaufen die Isolinien der Brechwertzunahme, die die Hauptlinie oberhalb der Mitte zwischen den Punkten $B_F$ und "$B_N$" durchsetzen, seitlich der Hauptlinie nach oben gekrümmt und erreichen den Rand des Brillenglases bei einer größeren y-Koordinate als der y-Koordinate, bei der sie die Hauptlinie durchsetzen.

Fig. 2b zeigt ebenfalls in einer Isolinien-Darstellung die Zunahme des Brechwerts in Gebrauchsstellung für ein herkömmliches progressives Brillenglas.

Einem Vergleich der Figuren 2a und 2b ist sofort zu entnehmen, daß die Isolinie 0,75 dpt bei dem herkömmlichen Brillenglas wesentlich "zerklüfteter" als bei dem erfindungsgemäßen Brillenglas verläuft. Vor allem aber verläuft die 0,75 dpt-Isolinie bei dem erfindungsgemä-ßen Brillenglas seitlich der Hautplinie nach oben, während sie beim Stand der Technik nach unten gebogen ist. Die 1,0 dpt-Isolinie ist wesentlich stärker als bei dem erfindungsgemäßen Brillenglas nach unten gebogen.

Fig. 3a zeigt in einer Isolinien-Darstellung den Verlauf der Linien gleichen (Rest)-Astigmatismus des Systems Brillenglas/Auge. Die entsprechende Darstellung für ein herkömmliches progressives Brillenglas zeigt Fig. 3b.

Einem Vergleich diese Figuren ist zu entnehmen, daß die Isolinien 0,25 und 0,5 dpt-Astigmatismus bei dem erfindungsgemäßen Brillenglas (Fig. 3a) erst bei deutlich geringeren Objektentfernungen als beim Stand der Technik (Fig. 3b) auf die Hauptblicklinie "zulaufen", so daß bei einer Blicksenkung für mittlere Objektentfernungen der Bereich des ungestörten Sehens, bzw. der Bereich klarer Sicht deutlich breiter als bei dem herkömmlichen progressiven Brillenglas gemäß Fig. 3b ist.

Zudem ist der Verlauf der Isolinien ohne Umkehrung, d. h. der Bereich klarer Sicht hat eine trichterförmige Form und ist nicht entsprechend einer "Sanduhr" geformt.

Fig. 4a zeigt den Verlauf des Brechwerts in Gebrauchsstellung (durchgezogene Linie) und der ersten Ableitung des Brechwerts längs der Hauptlinie (gestrichelte Linie) bzw. des Hauptmeridians für ein erfindungsgemäßes Brillenglas.

Fig. 4a ist zu entnehmen, daß der Verlauf der ersten Ableitung des Brechwerts monoton zwischen dem Fernbezugspunkt und im unteren Rand des Brillenglases ist. Beim Stand der Technik (Fig. 4b) zeigt jedoch die erste Ableitung einen nichtmonotonen Verlauf, der insbesondere für die beim Stand der Technik auftretende Einschnürung verantwortlich ist.

Vorstehend ist die Erfindung anhand eines Ausführungsbeispiels ohne Beschränkung der Allgemeinheit und der allgemeinen Anwendbarkeit der Erfindung beschrieben worden.

So können die erfindungsgemäßen Grundgedanken selbstverständlich auch auf Brillengläser übertragen werden, die für Personen mit einer Restakkomodationsfähigkeit gedacht sind. Eine entsprechende Abwandlung ist jederzeit möglich. Das vorstehend beschriebene Brillenglas kann selbstverständlich auch von Personen mit einer ausreichenden Restakkomodation dazu benutzt werden, durch den für Entfernung von 1,3 Meter ausgelegten Bezugspunkt des zweiten Durchblickbereichs in der Nähe scharf zu sehen.

Die exemplarisch genannten Anwendungsfälle des erfindungsgemäßen Brillenglases stellen selbstverständlich keine Einschränkung des allgemeinen Einsatzes dar.

In jedem Falle zeichnet sich das erfindungsgemäße Brillenglas dadurch aus, dass kein verbreiterter Nahteil und ein schmaler Bereich zum Sehen in Zwischenentfernungen, wie bei herkömmlichen progressiven Brillengläsern, sondern ein deutlich größerer Bereich als beim Stand der Technik vorhanden, durch den der Benutzer des Brillenglases in mittlere Entfernungen, d.h. Entfernungen von wenigstens 1 m scharf sehen kann.

**Patentansprüche**

1. Brillenglas, das

   - in einem ersten Durchblickbereich einen für das Sehen in die Ferne geeigneten Brechwert in Gebrauchsstellung, und
   - in einem zweiten Durchblickbereich einen für das Sehen in mittlere Entfernungen, d. h. für Entfernungen von ca. einem Meter und mehr geeigneten Brechwert in Gebrauchsstellung aufweist, und
   - bei dem der Brechwert kontinuierlich von dem ersten Durchblickbereich längs einer ebenen oder gewundenen Hauptlinie (HL) zu dem zweiten Durchblickbereich ansteigt,

   **dadurch gekennzeichnet, daß**

   - der Brechwert nicht nur von dem ersten Durchblickbereich zu dem zweiten Durchblickbereich, sondern auch über den zweiten Durchblickbereich hinaus bis zum unteren Rand des Brillenglases kontinuierlich zunimmt
   - der Bereich klarer Sicht, d.h. der Bereich, in dem der Restastigmatismus des Systems Brillenglas/Auge 0,5 dpt nicht übersteigt, sich unterhalb des ersten Durchblickbereichs zum unteren Rand des Brillenglases trichterförmig, d.h. ohne Einschnürung verengt.

2. Brillenglas nach Anspruch 1,
   **dadurch gekennzeichnet, daß** lediglich eine Fläche zum Anstieg des Brechwerts in Gebrauchsstellung beiträgt.

3. Brillenglas nach Anspruch 2,
   **dadurch gekennzeichnet, daß** diese Fläche die augenseitige Fläche ist.

4. Brillenglas nach Anspruch 2 oder 3,
   **dadurch gekennzeichnet, daß** die andere Fläche eine rotationssymmetrische oder torische Fläche ist.

5. Brillenglas nach einem der Ansprüche 1 bis 4,
   **dadurch gekennzeichnet, daß** bei einem nichtastigmatischen Auge der Bereich klarer Sicht durch die 0,5 dpt-Isolinie des Flächenastigmatismus begrenzt ist.

6. Brillenglas nach einem der Ansprüche 1 bis 5,
   **dadurch gekennzeichnet, daß** der Verlauf der ersten Ableitung des Brechwerts längs der Hauptlinie zwischen dem ersten und dem zweiten Durchblickbereich monoton ist.

7. Brillenglas nach Anspruch 6,
   **dadurch gekennzeichnet, daß** der Verlauf der ersten Ableitung des Brechwerts längs der Hauptlinie zwischen dem zweiten Durchblickbereich und dem unteren Rand des Brillenglases monoton ist.

8. Brillenglas nach einem der Ansprüche 1 bis 7,
   **dadurch gekennzeichnet, daß** das Brillenglas den gleichen Durchmesser wie ein herkömmliches Brillenglas mit progressiver Wirkung, d.h. ein Brillenglas mit einem zum Sehen in die Ferne und -einem zum Sehen in die Nähe (< 0,5m) ausgelegten Bereich hat.

9. Brillenglas nach einem der Ansprüche 1 bis 8,
   **dadurch gekennzeichnet, daß** die Fläche(n), die zum Anstieg des Brechwerts in der Gebrauchsstellung beitragen, individuell für die jeweilige Gebrauchssituation berechnet ist (sind).

10. Brillenglas nach einem der Ansprüche 1 bis 9,
    **dadurch gekennzeichnet, daß** die Isolinien der Brechwertzunahme im Bereich der Hauptblicklinie annähernd horizontal verlaufen.

11. Brillenglas nach Anspruch 10,
    **dadruch gekennzeichnet, daß** zumindest die Isolinien der Brechwertzunahme, die die Hauptlinie oberhalb der Mitte zwischen den Punkten $B_F$ und "$B_N$" durchsetzen, seitlich der Hauptlinie nach oben gekrümmt verlaufen und den Rand des Brillenglases bei einer größeren y-Koordinate erreichen als der y-Koordinate, bei der sie die Hauptlinie durchsetzen.

**12.** Brillenglas nach einem der Ansprüche 1 bis 11,
**dadurch gekennzeichnet, daß** der Fernbezugspunkt ($B_F$) und der Zentrierpunkt ($Z_P$) zusammenfallen.


**Claims**

**1.** Spectacle lens, which

• in a first viewing region has a refractive index suitable for long-distance vision in the position of use, and
• in a second viewing region has a refractive index suitable for vision in the medium distance, i.e. for distances of approximately one metre and more, in the position of use, and
• in which the refractive index continuously increases from the first viewing region along a straight or winding main line (ML) to the second viewing region,

**characterised in that**

• the refractive index continuously increases not only from the first viewing region to the second viewing region, but also beyond the second viewing region as far as the lower edge of the spectacle lens,
• the region of clear vision, i.e. the region, in which the residual astigmatism of the spectacle lens/eye system does not exceed 0.5 dpt, narrows below the first viewing region to the lower edge of the spectacle lens in a funnel shape, i.e. without any constriction.

**2.** Spectacle lens according to Claim 1, **characterised in that** only one surface contributes to the increase in the refractive index in the position of use.

**3.** Spectacle lens according to Claim 2, **characterised in that** this surface is the surface on the eye side.

**4.** Spectacle lens according to Claim 2 or 3, **characterised in that** the other surface is a rotationally symmetric or toroidal surface.

**5.** Spectacle lens according to one of Claims 1 to 4, **characterised in that** in the case of a non-astigmatic eye, the region of clear vision is defined by the 0.5 dpt isoline of surface astigmatism.

**6.** Spectacle lens according to one of Claims 1 to 5, **characterised in that** the course of the first derivation of the refractive index along the main line between the first and the second viewing region is monotonic.

**7.** Spectacle lens according to Claim 6, **characterised in that** the course of the first derivation of the refractive index along the main line between the second viewing region and the lower edge of the spectacle lens is monotonic.

**8.** Spectacle lens according to one of Claims 1 to 7, **characterised in that** the spectacle lens has the same diameter as a conventional spectacle lens with progressive effect, i.e. a spectacle lens with a region designed for long-distance sight and one for close distance sight (< 0.5 m).

**9.** Spectacle lens according to one of Claims 1 to 8, **characterised in that** the surface(s), which contributes/contribute to the increase in the refractive index in the position of use, is (are) calculated individually for the respective situation of use.

**10.** Spectacle lens according to one of Claims 1 to 9, **characterised in that** the isolines of the increase in the refractive index in the region of the main viewing line run virtually horizontally.

**11.** Spectacle lens according to Claim 10, **characterised in that** at least the isolines of the increase in the refractive index, which pass through the main line above the centre between points $B_F$ and "$B_N$", curve upwards laterally of the main line and reach the edge of the spectacle lens at a larger y-coordinate than the y-coordinate, at which they pass through the main line.

**12.** Spectacle lens according to one of Claims I to 11, **characterised in that** the far reference point ($B_F$) and the centring point ($Z_P$) coincide.

**Revendications**

1. Verre de lunette qui présente

   - dans une première zone de vision une focale convenant en position d'utilisation à la vision à grande distance et
   - dans une deuxième zone de vision une focale convenant en position d'utilisation à la vision à distance moyenne, c'est-à-dire à des distances d'environ 1 mètre et plus, et
   - pour lequel la focale augmente continûment de la première zone de vision à la deuxième zone de vision le long d'une ligne principale (HL) plane ou incurvée,

   **caractérisé en ce que**

   - la focale augmente continûment non seulement de la première zone de vision à la deuxième zone de vision, mais aussi au-delà de la deuxième zone de vision jusqu'au bord inférieur du verre de lunette,
   - la plage de vue nette, c'est-à-dire la plage dans laquelle l'astigmatisme résiduel du système « verre de lunette / oeil » ne dépasse pas 0,5 dpt se rétrécit en forme d'entonnoir, c'est-à-dire sans goulot d'étranglement, en dessous de la première zone de vision vers le bord du verre de lunette.

2. Verre de lunette selon la revendication 1, **caractérisé en ce que** seulement une surface contribue à l'augmentation de la focale en position d'utilisation.

3. Verre de lunette selon la revendication 2, **caractérisé en ce que** cette surface est la surface extérieure.

4. Verre de lunette selon la revendication 2 ou 3, **caractérisé en ce que** l'autre surface est une surface à symétrie de rotation ou une surface toroïdale.

5. Verre de lunette selon l'une quelconque des revendications 1 à 4, **caractérisé en ce que**, pour un oeil non astigmate, la zone de vision nette est limitée par la ligne isoastigmate à 0,5 dpt de l'astigmatisme sur la surface.

6. Verre de lunette selon l'une quelconque des revendications 1 à 5, **caractérisé en ce que** la variation de la dérivée première de la focale le long de la ligne principale entre la première et la deuxième zone de vision est monotone.

7. Verre de lunette selon la revendication 6, **caractérisé en ce que** la variation de la dérivée première de la focale le long de la ligne principale entre la deuxième zone de vision et le bord inférieur du verre de lunette est monotone.

8. Verre de lunette selon l'une quelconque des revendications 1 à 7, **caractérisé en ce que** le verre de lunette a le même diamètre qu'un verre de lunette conventionnel à effet progressif, c'est-à-dire un verre de lunette avec une zone conçue pour la vision à grande distance et une zone conçue pour la vision rapprochée (< 0,5 m).

9. Verre de lunette selon l'une quelconque des revendications 1 à 8, **caractérisé en ce que** la (les) surface(s) qui contribuent à l'augmentation de la focale dans la position d'utilisation est (sont) calculée(s) individuellement pour la situation d'utilisation respective.

10. Verre de lunette selon l'une quelconque des revendications 1 à 9, **caractérisé en ce que**, dans la zone de la ligne de vision principale, le tracé des lignes d'égal accroissement de la focale est à peu près horizontal.

11. Verre de lunette selon la revendication 10, **caractérisé en ce qu'**au moins les lignes d'égal accroissement de la focale qui traversent la ligne principale au-dessus du centre entre les points $B_F$ et $B_N$, s'étendent, latéralement par rapport à la ligne principale, en étant incurvées vers le haut et atteignent le bord du verre de lunette en une coordonnée y plus grande que la coordonnée y à laquelle elles traversent la ligne principale.

12. Verre de lunette selon l'une quelconque des revendications 1 à 11, **caractérisé en ce que** le point de référence « grande distance » ($B_F$) et le point central ($Z_P$) sont confondus.

Objektabstandsflaeche A1(x,y)

Fig. 1a

Objektabstandsflaeche A1(x,y)

Fig. 1b

Fig. 2a

Fig. 2b

Astigmatismus (Kom. Glas+Auge)

Fig. 3a

Astigmalismus (Kom. Glas+Auge)

Fig. 3

Fig. 4a

EP 1 415 189 B1

Fig. 4b